# EUROPÄISCHE PATENTSCHRIFT

(11) **EP 0 618 688 B1**
(45) Veröffentlichungstag und Bekanntmachung des Hinweises auf die Patenterteilung: **12.01.2000**
(21) Anmeldenummer: 94105029.6
(22) Anmeldetag: 30.03.1994
(51) Int. Cl.: H04B 7/26, B61L 3/12

(54) **Funksystem zur Nachrichtenübertragung zwischen mindestens einer Mobilstation und n längs einer Strecke angeordneten ortsfesten Basisstationen**
Data transmission radio system between at least one mobile station and n fixed base stations along a way
Système pour la transmission de données par radio entre au moins une station mobile et n stations de base fixes ordonnées le long d'un trajet

(30) Priorität: 01.04.1993 DE 4310645
(43) Veröffentlichungstag der Anmeldung: 05.10.1994
(73) Patentinhaber: Daimler-Benz Aerospace Aktiengesellschaft, 81663 München (DE)
(72) Erfinder: Plattner, Alfred, Dipl.-Ing., D-89160 Dornstadt (DE); Nüssle, Gerhard, Dipl.-Ing., D-89134 Blaustein (DE); Kühn, Walter, D-80802 München (DE)
(74) Vertreter: Fröhling, Werner Otto, Dr.

(56) Entgegenhaltungen:
- EP-A- 0 310 705
- DE-A- 3 231 564
- PLATTNER, A.: "A Millimetrewave Communication System for MAGLEV Application" VORTRAG AUF DEM IEEE GERMAN CHAPTER WORKSHOP 1992 IN ILMENAU, XP002043527

## Beschreibung

Die Erfindung bezieht sich auf ein Funksystem zur Nachrichtenübertragung zwischen mindestens einer Mobilstation und n längs einer Strecke angeordneten ortsfesten Basisstationen gemäß Oberbegriff des Patentanspruchs 1.

Ein solches Funksystem ist beispielsweise aus der EP-A-0 310 705 bekannt. Weiterhin sei auf die Veröffentlichung von A. Plattner: "A Millimetrewave Communication System for MAGLEV Application" (Vortrag auf dem IEEE German Chapter Workshop 1992 in Ilmenau) verwiesen.

Funksysteme dieser Art sind linienförmig ausgebildet und werden zur Übertragung von Sprach- und/oder Datensignalen eingesetzt. Die Signale können dabei in analoger Form (z.B. Sprachsignale) oder in digitaler Form vorliegen. Ein wichtiges Einsatzgebiet solcher Funksysteme ist das Gebiet der spurgebundenen Fahrzeuge wie Eisenbahnen, Magnet-Schwebebahnen oder mit führerlosen Fahrzeugen bediente "automatisierte" Hochregallager oder Fertigungsstraßen. Dort werden Funksysteme dieser Art bevorzugt als Betriebsleitfunksysteme eingesetzt.

Weitere Anwendungsgebiete sind beispielsweise der Straßenverkehr sowie der Verkehr zu Wasser und in der Luft.

Ein bekanntes Beispiel eines solchen Funksystems ist das in dem eingangs genannten Vortrag von A. Plattner beschriebene Betriebsleitfunksystem für die Transrapid-Versuchsanlage im Emsland (TVE). Bei diesem System sind mehrere ortsfeste Funkstaticnen ("Basisstationen") entlang der Fahrstrecke der Transrapid-Magnetschwebebahn verteilt angeordnet und stehen in Funkverbindung mit einer mobilen Funkstation ("Mobilstation"), die in dem Transrapid-Versuchsfahrzeug angeordnet ist. Während der Fahrt des Versuchsfahrzeugs entlang dieser Fahrstrecke treten die Basisstationen nacheinander in Funkkontakt mit der Mobilstation des Versuchsfahrzeugs und tauschen mit diesem Datentelegramme aus. Die Basisstationen senden ihre Funksignale auf einer ersten Frequenz fₒ₁, die Mobilstation sendet ihre Funksignale auf einer zweiten Frequenz fₒ₂ und dritten Frequenz fₒ₃. Dementsprechend empfängt die Mobilstation des Versuchsfahrzeugs Funksignale auf der Frequenz fₒ₁, und die Basisstationen empfangen Funksignale gleichzeitig auf den Frequenzen fₒ₂ und fₒ₃. Die drei Frequenzen fₒ₁ bis fₒ₃ liegen dabei im Millimeterwellengebiet.

Bei diesem bekannten System verbindet ein Modulationszubringer in Form eines Lichtwellenleiters die ortsfesten Basisstationen untereinander in Form einer Kette und die beiden Enden dieser Kette mit einer Funkzentrale. Die Mobilstation besteht aus einer digitalen Steuer- und Auswerteeinheit, an die zwei am Versuchsfahrzeug vorn bzw. hinten angeordnete Sende/Empfangsgeräte angeschlossen sind, von denen das eine auf der zweiten Frequenz fₒ₂ und das andere auf der dritten Frequenz fₒ₃ sendet und beide Geräte auf der ersten Frequenz fₒ₁ empfangen können. Dieses bekannte Funksystem stellt ein einkanaliges Funksystem dar, bei dem ein einkanaliger Modulationszubringer die ortsfesten Basisstationen in Form einer Kette miteinander und mit der Funkzentrale verbindet, wobei die Basisstationen zweikanalig ausgeführt sind. Wesentliche Nachteile dieses Systems bestehen darin, daß
a) bei Ausfall des Modulationszubringers das gesamte Funksystem ausfällt;
b) bei Ausfall einer Basisstation die Doppelausleuchtung ausfällt;
c) bei Ausfall eines Sende/Empfangsgeräts der Mobilstation die Funkdiversity ausfällt;
d) die Funkübertragung nur einkanalig ist und somit keine Kanalredundanz vorhanden ist;
e) ein Austausch von einzelnen Komponenten des Funksystems während des Betriebs ohne Unterbrechung der Funkverbindung nicht möglich ist.

Aus der EP 0 310 705 A1 ist ein Funkübertragungssystem für fahrweggebundene Verkehrsmittel bekannt, bei welchem entlang des Fahrzeugs eine Mehrzahl von ortsfesten Sende-Empfangs-Stationen angeordnet sind, die über eine Mikrowellen-Funkverbindung mit einem Fahrzeug kommunizieren können. Die ortsfesten Stationen sind in zwei Gruppen unterteilt, die mit getrennten Lichtleiterstrecken mit einer Zentrale verbunden sind. Die entlang des Fahrzeugs aufeinanderfolgenden ortsfesten Stationen sind alternierend einer der beiden Gruppen zugeordnet.

Die Aufgabe der Erfindung besteht darin, ein solches Funksystem dahingehend abzuändern, daß mit möglichst geringem Aufwand eine höhere Zuverlässigkeit bzw. Verfügbarkeit des Systems erzielt werden kann.

Die erfindungsgemäße Lösung der Aufgabe ist durch die kennzeichnenden Merkmale des Patentanspruchs 1 wiedergegeben. Die weiteren Ansprüche enthalten vorteilhafte Aus- und Weiterbildungen der Erfindung (Ansprüche 2 bis 14) sowie bevorzugte Anwendungen der Erfindung (Anspruch 15).

Die erfindungsgemäße Lösung sieht vor, daß ein Funksystem zur Nachrichtenübertragung zwischen mindestens einer Mobilstation und n längs einer Strecke angeordneten ortsfesten Basisstationen dahingehend ausgestaltet wird,
- daß die n ortsfesten Basisstationen in m Gruppen unterteilt sind mit 1 < m ≤ n und n > 1 und in Funkverbindung mit der mindestens einen Mobilstation stehen, die sich entlang der Strecke bewegt;
- daß die n ortsfesten Basisstationen erste Funksignale auf m unterschiedlichen Frequenzen einer ersten Menge von Frequenzen aussenden, wobei Basisstationen, die ein- und derselben Gruppe angehören, auf ein und derselben Frequenz senden und Basisstationen, die unterschiedlichen Gruppen angehören, auf unterschiedlichen Frequenzen senden
- daß die mindestens eine Mobilstation zweite Funksignale auf m unterschiedlichen Frequenzen einer zweiten Menge von Frequenzen aussendet, wobei die Schnittmenge der ersten und zweiten Menge Null ist;
- daß alle n oder ein Teil der n ortsfesten Basisstationen die zweiten Funksignale auf allen m oder auf einem Teil der m Frequenzen der zweiten Menge empfangen und die mindestens eine Mobilstation die ersten Funksignale auf allen m Frequenzen der ersten Menge empfängt;
- daß die ortsfesten Basisstationen jeder der m Gruppen jeweils über einen gruppeneigenen Moduiationszubringer untereinander in Form einer Basisstationskette verbunden sind und die Enden dieser m voneinander unabhängigen Ketten mit einer Funkzentrale verbunden sind;
- daß entlang der Strecke direkt benachbarte Basisstationen immer unterschiedlichen Gruppen angehören.

Wesentliche Vorteile der Erfindung bestehen darin, daß eine sehr hohe Zuverlässigkeit und Verfügbarkeit des gesamten Funksystems erreicht wird, daß bei Geräteausfall das Gesamtsystem in seiner Funktionsfähigkeit insgesamt kaum beeinträchtigt wird und daß die Reparatur bzw. der Austausch von Systemkomponenten ohne Störung des Betriebs des Systems durchgeführt werden können.

In einer bevorzugten Ausführungsform der erfindungsgemäßen Lösung ist vorgesehen, daß die Zuordnung der einzelnen entlang der Strecke angeordneten Basisstationen zu den einzelnen Gruppen dergestalt vorgenommen ist, daß es mindestens m direkt aufeinanderfolgende Basisstationen entlang der Strecke gibt, bei denen die l-te Basisstation jeweils aus der l-ten Gruppe stammt mit l=1, 2....m.

Wenn beispielsweise m=3 Sendefrequenzen fₐ, f_{b}, f_{c} n=12 ortsfesten Basisstationen F₁....F₁₂ zugeordnet werden müssen, so kann dies auf vielfältige Weise geschehen. Zu beachten ist nach der Erfindung lediglich, daß auf der gesamten Strecke niemals direkt benachbarte ortsfeste Basisstationen ein und derselben Gruppe angehören dürfen, d.h. auf ein und derselben Sendefrequenz senden.

Eine mögliche Zuordnung der drei Sendefrequenzen auf die zwölf Basisstationen könnte beispielsweise so aussehen:

| | | | | | | | | | | | |
|---|---|---|---|---|---|---|---|---|---|---|---|
| F₁ | F₂ | F₃ | F₄ | F₅ | F₆ | F₇ | F₈ | F₉ | F₁₀ | F₁₁ | F₁₂ |
| fₐ | f_{c} | fₐ | f_{b} | f_{c} | fₐ | f_{c} | fₐ | f_{c} | f_{b} | fₐ | f_{b} |

oder so:

| | | | | | | | | | | | |
|---|---|---|---|---|---|---|---|---|---|---|---|
| F₁ | F₂ | F₃ | F₄ | F₅ | F₆ | F₇ | F₈ | F₉ | F₁₀ | F₁₁ | F₁₂ |
| fₐ | f_{c} | fₐ | f_{c} | fₐ | f_{b} | f_{c} | fₐ | f_{c} | fₐ | f_{b} | fₐ |

wobei der Einfachheit halber angenommen sei, daß die ortsfesten Basisstationen Fᵢ, i=1...12 mit monoton aufsteigenden Index i entlang der Strecke angeordnet sind. Die Zuordnung nach der ersten Tabelle ergibt m=3 Gruppen von ortsfesten Basisstationen, von denen die erste (F₁, F₃, F₆, F₈, F₁₁) der ersten Sendefrequenz fₐ, die zweite (F₄, F₁₀, F₁₂) der zweiten Sendefrequenz f_{b} und die dritte (F₂, F₅, F₇, F₉) der dritten Sendefrequenz f_{c} zugeordnet sind. Entsprechend ergibt sich nach der zweiten Tabelle eine erste Gruppe (F₁, F₃, F₅, F₈, F₁₀, F₁₂), eine zweite Gruppe (F₆, F₁₁) und eine dritte Gruppe (F₂, F₄, F₇, F₉). In beiden Beispielen sind die Gruppen unterschiedlich groß, d.h. sie variieren in der Anzahl der ihnen zugeordneten Basisstationen, was eine ungleichmäßige Auslastung der einzelnen Sendefrequenzen zur Folge hat.

Eine bessere Auslastung wird natürlich dann erreicht, wenn die m Gruppen möglichst gleich groß sind, d.h. möglichst die gleiche Anzahl von ihnen zugeordnete Basisstationen umfassen.

Dann ist es nämlich möglich, daß die Zuordnung der m Sendefrequenzen zu den n ortsfesten Basisstationen so vorgenommen wird, daß diese Zuordnung der m Basisstationen zu den einzelnen Gruppen eine erste Grundfolge bildet und daß sich diese erste Grundfolge entlang der Strecke mindestens einmal zumindest zum Teil, vorzugsweise jedoch vollständig wiederholt ("periodische" Lösung) oder daß diese Zuordnung der m Basisstationen zu den einzelnen Gruppen eine erste Grundfolge bildet und daß es entlang der Strecke mindestens eine weitere Folge von m direkt aufeinanderfolgenden Basisstationen gibt, deren Zuordnung zu den einzelnen Gruppen durch Permutation aus der ersten Grundfolge hervorgeht ("Permutations"-Lösung).

Im Beispielsfall heißt dies, daß eine "periodische" Zuordnung beispielsweise so aussehen könnte:

| | | | | | | | | | | | |
|---|---|---|---|---|---|---|---|---|---|---|---|
| F₁ | F₂ | F₃ | F₄ | F₅ | F₆ | F₇ | F₈ | F₉ | F₁₀ | F₁₁ | F₁₂ |
| f_{c} | fₐ | f_{b} | f_{c} | fₐ | f_{b} | f_{c} | fₐ | f_{b} | f_{c} | fₐ | f_{b} |

während eine "Permutations"-Lösung beispielsweise so aussehen könnte:

| | | | | | | | | | | | |
|---|---|---|---|---|---|---|---|---|---|---|---|
| F₁ | F₂ | F₃ | F₄ | F₅ | F₆ | F₇ | F₈ | F₉ | F₁₀ | F₁₁ | F₁₂ |
| fₐ | f_{b} | f_{c} | f_{b} | f_{c} | fₐ | f_{c} | fₐ | f_{b} | f_{c} | f_{b} | fₐ |

bei der die Grundfolge fₐ, f_{b}, f_{c} für die Basisstationen F₁, F₂ und F₃ bei den folgenden Basisstationen permutiert ist: f_{b}, f_{c}, fₐ (F₄, F₅, F₆) bzw. f_{c}, fₐ, F_{b} (F₇, F₈, F₉) bzw. f_{c}, f_{b}, fₐ (F₁₀, F₁₁,F₁₂).

Selbstverständlich sind auch andere Frequenzzuordnungen möglich, sei es auf Basis der "periodischen" Lösung oder auf Basis der "Permutations"-Lösung.

Im folgenden wird die Erfindung anhand der Figuren näher erläutert. Es zeigen:
- FIG. 1: das Blockschaltbild eines bevorzugten Ausführungsbeispiel des erfindungsgemäßen Funksystems in der Ausbildung eines Betriebsleitfunksystems für spurgebundene Fahrzeuge;
- FIG. 2: ein Blockschaltbild einer vorteilhaften Ausführungsform der Funkzentrale des Funksystems gemäß FIG. 1.

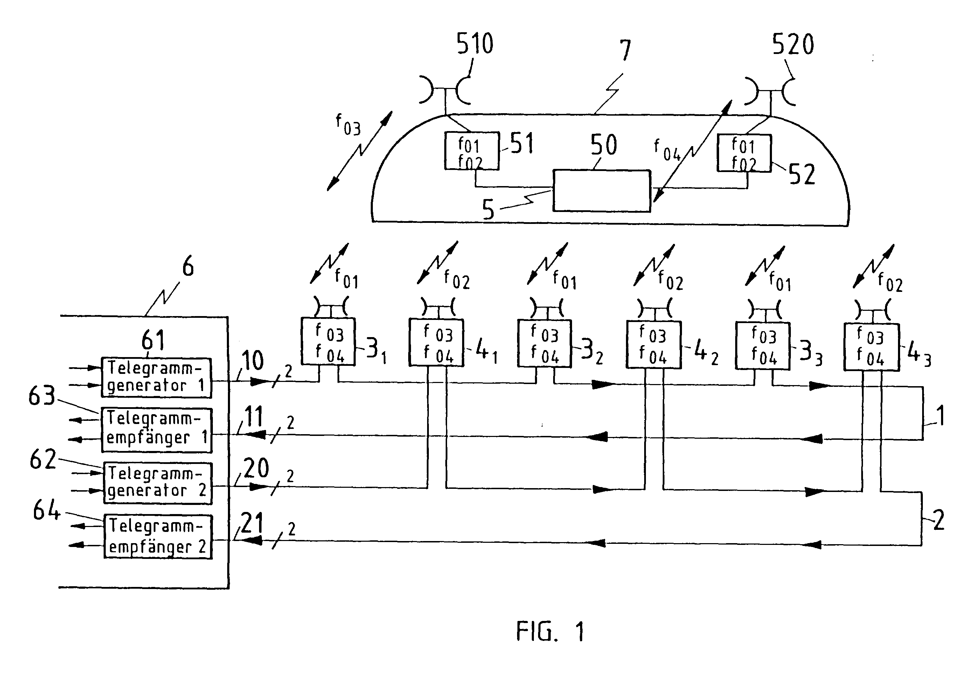

Bei dem in FIG. 1 dargestellten Betriebsleitfunksystem sind (beispielhaft) n=6 ortsfeste Basisstationen (in m=2 Gruppen 3 und 4 unterteilt) entlang einer Strecke verteilt angeordnet und stehen in Funkverbindung mit einer Mobilstation 5, die in einer Lokomotive 7 angeordnet ist, die sich entlang der Strecke bewegt. Die Mobilstation 5 empfängt auf einer ersten und zweiten Frequenz fₒ₁, fₒ₂ und sendet auf einer dritten und vierten Frequenz fₒ₃, fₒ₄.

Die Basisstationen der ersten Gruppe 3 senden auf der ersten Frequenz fₒ₁ und die der zweiten Gruppe 4 auf der zweiten Frequenz f₀₂; die Basisstationen beider Gruppen 3, 4 empfangen auf der dritten und vierten Frequenz fₒ₃, f₀₄.

Ein erster Modulationszubringer 1 verbindet die Basisstationen der ersten Gruppe 3 untereinander in Form einer ersten Kette und die beiden Enden 10, 11 dieser ersten Kette mit einer Funkzentrale 6. Ein zweiter Modulationszubringer 2 verbindet die Basisstationen der zweiten Gruppe 4 untereinander in Form einer zweiten Kette und die beiden Enden 20, 21 dieser zweiten Kette ebenfalls mit der Funkzentrale 6.

Entlang der Strecke sind abwechselnd Basisstationen der ersten und der zweiten Gruppe 3, 4 angeordnet, d.h. die Zuordnung der Frequenzen f₀₁ und f₀₂ zu den einzelnen Basisstationen erfolgt gemäß der "periodischen" Lösung (die "Permutations"-Lösung scheidet in diesem speziellen Fall aus, da es sonst Paare direkt benachbarter Basisstationen gäbe, die auf der gleichen Frequenz f₀₁ oder f₀₂ senden würden).

Die Modulationszubringer 1 bzw. 2 sind jeweils als Zweidrahtleitungen ausgelegt, die beispielsweise aus Lichtwellenleitern (LWL) gebildet werden.

Das in FIG. 1 gezeigte Funksystem ist als Betriebsleitfunksystem für die Übertragung digitaler Daten bzw. den Austausch von Nachrichten in Form von digitalen Telegrammen zwischen der Funkzentrale 6 und der Lokomotive 7 ausgelegt. Dementsprechend sind an die "sendeseitigen" Enden 10 bzw. 20 des ersten bzw. zweiten Modulationszubringers 1 bzw. 2 jeweils eine Funksignalerzeugungseinheit in Form eines Telegrammgenerators 61 bzw. 62 angeschlossen und an den empfangsseitigen Enden 11 bzw. 21 der beiden Modulationszubringer 1 bzw. 2 jeweils eine Funksignalauswertungseinheit in Form eines Telegrammempfängers 63 bzw. 64. Die Mobilstation 5 in der Lokomotive 7 besteht aus einer weiteren Funkzentrale 50, die an zwei separate Sende/Empfangsgeräte 51, 52 angeschlossen ist, von denen das eine Gerät (beispielhaft das Gerät 51) oder zumindest dessen Sende/Empfangsantenne 510 am vorderen Ende der Lokomotive 7 angeordnet ist und Funksignale auf der dritten Frequenz fₒ₃ aussendet und das andere Gerät (im Beispiel entsprechend das Gerät 52) oder zumindest dessen Sende/Empfangsantenne 520 am hinteren Ende der Lokomotive 7 angeordnet ist und Funksignale auf der vierten Frequenz fₒ₄ aussendet. Beide Geräte 51, 52 empfangen auf der ersten und zweiten Frequenz fₒ₁, fₒ₂. In der weiteren Funkzentrale 50 der Mobilstation 5 werden einerseits Telegramme erzeugt und über die Sende/Empfangsgeräte 51, 52 ausgesendet bzw. andererseits die über diese beiden Geräte 51, 52 empfangenen Funktelegramme der ortsfesten Basisstationen 3 bzw. 4 ausgewertet.

Das Funksystem ist so organisiert, daß die Mobilstation 5 der Lokomotive 7 während der Fahrt entlang der Strecke immer eingeschaltet ist und demgemäß erste Funksignale der ortsfesten Basisstationen beider Gruppen 3 und 4 über beide Sende/Empfangsgeräte 51 bzw. 52 auf den Frequenzen fₒ₁ und fₒ₂ zu jeder Zeit empfangen kann bzw. jederzeit zweite Funksignale aussenden kann (und zwar über das Sende/Empfangsgerät 51 auf der Frequenz fₒ₃ und über das Sende/Empfangsgerät 52 auf der Frequenz fₒ₄), während von den n Basisstationen beider Gruppen 3 und 4 immer nur diejenigen Basisstationen "aktiviert" werden (d.h. Funksignale senden und empfangen können), die innerhalb der Funkreichweite der Mobilstation 5 liegen.

Die Funkreichweiten der Mobilstation 5 bzw. der Basisstationen beider Gruppen 3 und 4 sind dabei so bemessen, daß die Mobilstation 5 mindestens mit den beiden jeweils nächstliegenden (und damit untereinander direkt benachbarten) Basisstationen längs der Strecke in Funkverbindung stehen kann. Konkret bedeutet dies, daß bei den n=6 längs der Strecke angeordneten Basisstationen der Gruppen 3 und 4 gemäß FIG. 1 die Mobilstation 5 während der Fahrt der Lokomotive 7 von dem einen Ende der Strecke zu dem anderen Ende der Strecke nacheinander mit folgenden Basisstationspaaren Funkkontakt hat: zunächst mit dem Stationspaar 3₁ und 4₁ (die in dieser Zeit aktiviert, d.h. eingeschaltet sind, während die übrigen Basisstationen 3₂, 4₂, 3₃, 4₃ desaktiviert, d.h. ausgeschaltet sind), dann mit dem Stationspaar 4₁ und 3₂ (in dieser Zeit sind die Basisstationen 3₁, 4₂, 3₃ und 4₃ desaktiviert), dann mit dem Stationspaar 3₂ und 4₂ (in dieser Zeit sind die Basisstationen 3₁, 4₁, 3₃ und 4₃ desaktiviert), dann mit dem Stationspaar 4₂ und 3₃ (in dieser Zeit sind die Basisstationen 3₁, 4₁, 3₂, 4₃ desaktiviert) und schließlich mit dem Stationspaar 3₃ und 4₃ (in dieser Zeit sind die Basisstationen 3₁, 4₁, 3₂ und 4₂ desaktiviert).

Hieraus folgt, daß die weitere Funkzentrale 50 der Mobilstation 5 bei ungestörtem Betrieb des Funksystems immer vier Funksignale empfängt, die von dem jeweils aktivierten Basisstationspaar (z.B. dem Stationspaar 3₂ und 4₁) herstammen; zwei Signale empfängt die weitere Funkzentrale dabei über das erste Sende/Empfangsgerät 51 und zwei Signale über das zweite Sende/Empfangsgerät 52. Da die Basisstationen des jeweils aktivierten Basisstationspaares immer unterschiedlichen Gruppen angehören, empfangen beide Sende/Empfangsgeräte 51, 52 der Mobilstation 5 somit immer zwei Signale unterschiedlicher Frequenz gleichzeitig, nämlich ein Signal auf der Frequenz fₒ₁, das von der jeweils aktivierten (d.h. nächstliegenden) Basisstation der ersten Gruppe 3 herstammt (z.B. der Basisstation 32) und ein Signal auf der Frequenz fₒ₂, das von der jeweils aktivierten (d.h. nächstliegenden) Basisstation der zweiten Gruppe 4 herstammt (z.B. der Basisstation 4₁). Umgekehrt empfängt jede der beiden jeweils aktivierten Basisstationen jeweils zwei Funksignale der Mobilstation 5 auf unterschiedliche Frequenzen, nämlich ein Funksignal auf der Frequenz fₒ₃, das vom Sende/Empfangsgerät 51 der Mobilstation 5 herstammt, und ein Funksignal auf der Frequenz fₒ₄, das vom Sende/Empfangsgerät 52 der Mobilstation 5 herstammt.

Für den Fall, daß nicht nur zu einer Lokomotive Funkkontakt gehalten werden muß, sondern zu mehreren Lokomotiven (die sich längs der gleichen Strecke bewegen), ist in einer Weiterbildung des Funksystems vorgesehen, daß die Mobilstationen der einzelnen Lokomotiven in der oben geschilderten Weise nach dem Zeitmultiplexverfahren mit der Funkzentrale in Funkkontakt stehen. Befinden sich beispielsweise drei Lokomotiven auf der von den n=6 Basisstationen gemäß FIG. 1 ausgeleuchteten Strecke, von denen beispielsweise die Basisstationen 3₁ und 4₁ in Funkreichweite der Mobilstation der ersten Lokomotive stehen bzw. die Basisstationen 3₂ und 4₂ in Funkreichweite der Mobilstation der zweiten Lokomotive bzw. die Basisstationen 3₃ und 4₃ in Funkreichweite der Mobilstation der dritten Lokomotive, so würde nach dieser Weiterbildung des oben beschriebenen Verfahrens die Mobilstation der ersten Lokomotive in einem ersten Zeitschlitz in Funkkontakt mit der Funkzentrale stehen, die Mobilstation der zweiten Lokomotive entsprechend in einem dem ersten Zeitschlitz nachfolgenden zweiten Zeitschlitz und die Mobilstation der dritten Lokomotive entsprechend in einem dem zweiten Zeitschlitz nachfolgenden dritten Zeitschlitz. Innerhalb der einzelnen Zeitschlitze läuft die Funkkommunikation zwischen der jeweiligen Lokomotive und der Funkzentrale in der oben beschriebenen Weise ab.

Bei dieser Weiterbildung muß durch an sich bekannte und hier nicht weiter erläuterte Maßnahmen natürlich sichergestellt sein, daß zum einen die Funkreichweite der mobilen und ortsfesten Stationen so bemessen ist, daß eine Funkverbindung zwischen einer Mobilstation und den beiden dieser Mobilstation räumlich am nächsten liegenden Basisstationen möglich ist. Da hier ein Zeitmultiplexverfahren verwendet wird, bei dem den einzelnen Lokomotiven jeweils eine bestimmte Adresse und ein bestimmter Zeitschlitz zugeordnet sind, ist die Einhaltung eines Mindestabstands zwischen den einzelnen Lokomotiven nicht erforderlich.

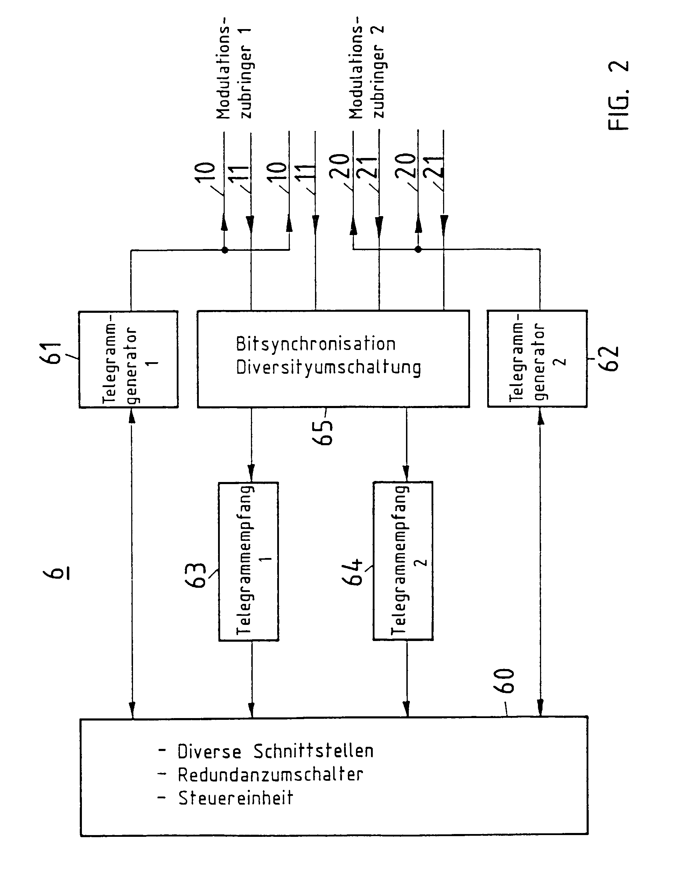

In FIG. 2 ist der prinzipielle Aufbau einer bevorzugten Ausführungsform der (ortsfesten) Funkzentrale 6 gezeigt.

Eine Steuer- und Auswerteeinheit 60, die auch diverse Schnittstellen zum Anschluß anderer Geräte (Tastatur, Bildschirm, Telefon, Datenerzeugungs-, -verarbeitungs- und -auswertungsgeräte usw.) sowie Redundanzumschalter enthält, ist mit dem ersten bzw. zweiten Telegrammgenerator 61, 62 verbunden, die ihrerseits über Zweidrahtleitungen mit den "sendeseitigen" Enden 10, 20 des ersten bzw. zweiten Modulationszubringers 1, 2 verbunden sind. Ferner ist die Steuer- und Auswerteeinheit 60 mit den Ausgängen der beiden Telegrammempfänger 63, 64 verbunden, die ihrerseits mit ihren Eingängen über eine Bitsynchronisations- und Diversity-Umschaltungseinheit 65 über Zweidrahtleitungen mit den "empfangsseitigen" Enden 11 bzw. 21 der beiden Modulationszubringer 1 bzw. 2 verbunden sind.

Das diesem Betriebsleitfunksystem zugrunde liegende Konzept teilt somit den (an sich bekannten) Modulationszubringer zu den ortsfesten Basisstationen der beiden Gruppen 3, 4 in zwei voneinander unabhängige Ketten 1, 2 auf, wobei die letzte Basisstation 3₃ bzw. 4₃ in einer solchen Kette 3, 4 die Verbindung zurück zur ortsfesten Funkzentrale 6 realisiert. Dadurch entsteht jeweils eine Ringstruktur, ähnlich der eines Token Ringes.

Die beiden Ketten 1, 2 von Basisstationen sind räumlich so angeordnet, daß die einzelnen Stationen der beiden Gruppen 3, 4 wie die Zähne eines Kammes ineinander greifen. Jede dieser Modulationszubringer-Ketten 1, 2 ist redundant aufgebaut. Hierbei entsteht unter Ausnutzung dieser Redundanz ein vierkanaliges Übertragungssystem, bei dem die Basisstationen 3 des ersten Modulationszubringer 1 auf der ersten Frequenz fₒ₁ erste Funksignale aussenden und entsprechend Funksignale auf dem Frequenzpaar fₒ₃, f₀₄ empfangen, während die Basisstationen 4 des zweiten Modulationszubringers 2 auf der zweiten Frequenz fₒ₂ erste Funksignale aussenden und Funksignale ebenfalls auf dem Frequenzpaar fₒ₃, fₒ₄ empfangen. Das entspricht einem Funksystem mit zwei voneinander unabhängigen Übertragungskanälen. Dazu passend sendet die Mobilstation 5 zweite Funksignale auf dem Frequenzpaar fₒ₃ und f₀₄ und empfängt die ersten Funksignale auf dem Frequenzpaar f₀₁, fₒ₂.

Die ortsfesten Datenquellen bilden dabei die beiden Telegrammgeneratoren 61 und 62 der Funkzentrale 6, so daß pro Funkkanal eine eigenständige Datenquelle vorhanden ist. Nach der Diversityumschaltung in der Umschaltungseinheit 65 bilden die beiden Telegrammempfänger 63, 64 der Funkzentrale 6 die ortsfesten Datensenken, so daß pro Funkkanal auch eine eigenständige Datensenke vorhanden ist.

Das in den Figuren beschriebene Funksystem besteht somit sowohl im Bereich der Datensenke und der Datenquelle als auch auf dem gesamten Übertragungsweg aus zwei voneinander unabhängigen Funkkanälen, welche zusätzlich redundant aufgebaut sind und unter Ausnutzung dieser Redundanz eine vierfache Diversity bieten.

Die weitere Funkzentrale (50 in FIG. 1) der Mobilstation ist in einer bevorzugten Ausführungsform ähnlich ausgestaltet wie die Funkzentrale gemäß FIG. 2. Im einzelnen enthält sie eine weitere Steuer- und Auswerteeinheit sowie eine weitere erste und weitere zweite Funksignalerzeugungseinheit und eine weitere erste und weitere zweite Funksignalauswertungseinheit. Die weitere Steuer- und Auswerteeinheit ist bei dieser Ausführungsform über die weitere erste Funksignalerzeugungseinheit mit dem Sendeeingang des ersten Sende/Empfangsgeräts (51 in FIG. 1) und über die weitere erste Funksignalauswertungseinheit mit dem Empfängerausgang des ersten Sende/Empfangsgeräts (51 in FIG. 1) verbunden. Über die weitere zweite Funksignalerzeugungseinheit ist sie ferner mit dem Sendeeingang des zweiten Sende/Empfangsgeräts (52 in FIG.1) und über die weitere zweite Funksignalauswertungseinheit mit dem Empfängerausgang des zweiten Sende/Empfangsgeräts (52 in FIG. 1) verbunden. Zwischen den beiden weiteren Funksignalauswertungseinheiten und den Empfängerausgängen der beiden Sende/Empfangsgeräte (51, 52 in FIG. 1) ist außerdem eine weitere Bitsynchronisations- und Diversityumschaltungseinheit geschaltet.

Die weiteren Funkzentralen der einzelnen Mobilstationen bzw. die ortsfeste Funkzentrale können als analog arbeitende Einheiten realisiert werden. Bevorzugt werden sie jedoch als rein digital arbeitende Einheiten realisiert.

Es versteht sich, daß die Erfindung nicht auf die beschriebenen Ausführungsbeispiele beschränkt ist, sondern vielmehr auch auf weitere übertragen werden kann.

So ist selbstverständlich auch die Ausbildung eines entsprechenden Funksystems zur Übertragung analoger Daten bzw. Signale denkbar.

Ferner können die Modulationszubringer auch mit metallischen Leitern gebildet werden.

Schließlich ist es denkbar, das erfindungsgemäße Funksystem auch in anderweitigen Bereichen einzusetzen: so z.B. als Leitfunksystem für den Straßenverkehr entlang der Autobahnen und Überlandstraßen oder als Leitfunksystem für Schiffe entlang der Schiffahrtsstraßen auf See bzw. auf Flüssen.

## Patentansprüche

1. Funksystem zur Nachrichtenübertragung zwischen mindestens einer Mobilstation und n längs einer Strecke angeordneten ortsfesten Basisstationen, bei welchem
- die n ortsfesten Basisstationen in m Gruppen (3, 4) unterteilt sind mit 1 < m ≤ n und n > 1 und in Funkverbindung stehen mit der mindestens einen Mobilstation (5), die sich entlang der Strecke bewegt,
- die ortsfesten Basisstationen jeder der m Gruppen (3, 4) jeweils über einen gruppeneigenen Modulationszubringer (1, 2) untereinander in Form einer Basisstationskette verbunden und die Enden (10, 11 bzw. 20, 21) dieser m von einander unabhängigen Ketten (1, 2) mit einer Funkzentrale (6) verbunden sind,
- entlang der Strecke direkt benachbarte Basisstationen immer unterschiedlichen Gruppen (3, 4) angehören,
gekennzeichnet durch folgende Merkmale,
- die n ortsfesten Basisstationen (3, 4) senden erste Funksignale auf m unterschiedlichen Frequenzen (fₒ₁, fₒ₂) einer ersten Menge von Frequenzen aus, wobei Basisstationen, die ein und derselben Gruppe (3 bzw. 4) angehören, auf ein und derselben Frequenz (fₒ₁ bzw. fₒ₂) senden und Basisstationen, die unterschiedlichen Gruppen (3, 4) angehören, auf unterschiedlichen Frequenzen (fₒ₁, fₒ₂) senden;
- die mindestens eine Mobilstation (5) sendet zweite Funksignale auf m unterschiedlichen Frequenzen (fₒ₃, fₒ₄) einer zweiten Menge von Frequenzen aus, wobei die Schnittmenge der ersten und zweiten Menge Null ist;
- alle n oder ein Teil der n ortsfesten Basisstationen (3, 4) empfangen die zweiten Funksignale auf allen m oder auf einem Teil der m Frequenzen (fₒ₃, fₒ₄) der zweiten Menge und die mindestens eine Mobilstation (5) empfängt die ersten Funksignale auf allen m Frequenzen (fₒ₁, fₒ₂) der ersten Menge.

2. Funksystem nach Anspruch 1, dadurch gekennzeichnet, daß die Zuordnung der einzelnen entlang der Strecke angeordneten Basisstationen zu den einzelnen Gruppen (3, 4) dergestalt vorgenommen ist, daß es mindestens m direkt aufeinanderfolgende Basisstationen entlang der Strecke gibt, bei denen die l-te Basisstation jeweils aus der l-ten Gruppe stammt mit l=1,2,...m.

3. Funksystem nach Anspruch 2, dadurch gekennzeichnet, daß diese Zuordnung der m Basisstationen zu den einzelnen Gruppen eine erste Grundfolge bildet und daß sich diese erste Grundfolge entlang der Strecke mindestens einmal zumindest zum Teil, vorzugsweise jedoch vollständig wiederholt.

4. Funksystem nach Anspruch 2, dadurch gekennzeichnet, daß diese Zuordnung der m Basisstationen zu den einzelnen Gruppen eine erste Grundfolge bildet und daß es entlang der Strecke mindestens eine weitere Folge von m direkt aufeinanderfolgenden Basisstationen gibt, deren Zuordnung zu den einzelnen Gruppen durch Permutation aus der ersten Grundfolge hervorgeht.

5. Funksystem nach einem der vorhergehenden Ansprüche, dadurch gekennzeichnet, daß von den n Basisstationen der beiden Gruppen (3, 4) immer nur die beiden Basisstationen aktiviert sind, d.h. Funksignale senden und empfangen können, die der Mobilstation (5) räumlich jeweils am nächsten liegen und daß die übrigen n-2 Basisstationen der beiden Gruppen (3, 4) jeweils deaktiviert sind.

6. Funksystem nach einem der vorhergehenden Ansprüche, dadurch gekennzeichnet, daß bei mehreren Mobilstationen die Funkkommunikation der einzelnen Mobilstationen mit der Funkzentrale im Zeitmultiplexverfahren abgewickelt wird.

7. Funksystem nach einem der vorhergehenden Ansprüche, dadurch gekennzeichnet, daß die n ortsfesten Basisstationen in m=2 Gruppen (3, 4) unterteilt sind, daß die Basisstationen der ersten Gruppe (3) die ersten Funksignale auf einer ersten Frequenz (fₒ₁) und die Basisstationen der zweiten Gruppe (4) die ersten Funksignale auf einer zweiten Frequenz (fₒ₂) aussenden, daß die mindestens eine Mobilstation (5) die zweiten Funksignale auf einer dritten und vierten Frequenz (fₒ₃, fₒ₄) aussendet und die ersten Funksignale auf der ersten und zweiten Frequenz (fₒ₁, fₒ₂) empfängt und daß die ortsfesten Basisstationen beider Gruppen (3, 4) die zweiten Funksignale auf der dritten und vierten Frequenz (fₒ₃, Fₒ₄) empfangen.

8. Funksystem nach Anspruch 7, dadurch gekennzeichnet, daß die Mobilstation (5) eine weitere Funkzentrale (50) sowie zwei mit dieser weiteren Funkzentrale (50) verbundene Sende/Empfangsgeräte (51, 52) aufweist, daß das erste Sende/Empfangsgerät (51) die zweiten Funksignale auf der dritten Frequenz (fₒ₃) und das zweite Sende/Empfangsgerät (52) auf der vierten Frequenz (fₒ₄) aussenden und beide Sende/Empfangsgeräte (51, 52) die ersten Funksignale auf der ersten und zweiten Frequenz (fₒ₁, fₒ₂) empfangen.

9. Funksystem nach einem der Ansprüche 7 oder 8, dadurch gekennzeichnet, daß die Funkzentrale (6) eine Steuer- und Auswerteeinheit (60) sowie eine erste und zweite Funksignalerzeugungseinheit (61, 62) und eine erste und zweite Funksignalauswertungseinheit (63, 64) aufweist, daß die Steuer- und Auswerteeinheit (60) über die erste Funksignalerzeugungseinheit (61) mit dem sendeseitigen Ende (10) des ersten Modulationszubringers (1) für die erste Gruppe (3) von ortsfesten Basisstationen und über die erste Funksignalauswertungseinheit (63) mit dem empfangsseiten Ende (11) des ersten Modulationszubringers (1) verbunden ist und über die zweite Funksignalerzeugungseinheit (62) mit dem sendeseitigen Ende (20) des zweiten Modulationszubringers (2) für die zweite Gruppe (4) von ortsfesten Basisstationen und über die zweite Funksignalauswertungseinheit (64) mit dem empfangsseitigen Ende (21) des zweiten Modulationszubringers (2) verbunden ist.

10. Funksystem nach Anspruch 9, dadurch gekennzeichnet, daß zwischen den beiden Funksignalauswertungseinheiten (63, 64) und den empfangsseiten Enden (11, 21) der beiden Modulationszubringer (1, 2) eine Bitsynchronisations- und Diversityumschaltungseinheit (65) geschaltet ist.

11. Funksystem nach einem der Ansprüche 7 bis 10, dadurch gekennzeichnet, daß die weitere Funkzentrale (50) der mindestens einen Mobilstation (5) eine weitere Steuer- und Auswerteeinheit sowie eine weitere erste und weitere zweite Funksignalerzeugungseinheit und eine weitere erste und weitere zweite Funksignalauswertungseinheit aufweist, daß die weitere Steuer- und Auswerteeinheit über die weitere erste Funksignalerzeugungseinheit mit dem Sendeeingang des ersten Sende/Empfangsgeräts (51) und über die weitere erste Funksignalauswertungseinheit mit dem Empfängerausgang des ersten Sende/Empfangsgeräts (51) verbunden ist und über die weitere zweite Funksignalerzeugungseinheit mit dem Sendeeingang des zweiten Sende/Empfangsgeräts (52) und über die weitere zweite Funksignalauswertungseinheit mit dem Empfängerausgang des zweiten Sende/Empfangsgeräts (52) verbunden ist.

12. Funksystem nach Anspruch 11, dadurch gekennzeichent, daß zwischen den beiden weiteren Funksignalauswertungseinheiten und den Empfängerausgängen der beiden Sende/Empfangsgeräte (51, 52) eine weitere Bitsynchronisations- und Diversityumschaltungseinheit geschaltet ist.

13. Funksystem nach einem der vorhergehenden Ansprüche, dadurch gekennzeichnet, daß die Modulationszubringer (1, 2) als Lichtwellenleiter ausgebildet sind.

14. Funksystem nach einem der vorhergehenden Ansprüche, dadurch gekennzeichnet, daß die Frequenzen der ersten Menge (fₒ₁, fₒ₂) um den Duplexabstand von den Frequenzen der zweiten Menge (fₒ₃, fₒ₄) versetzt sind.

15. Funksystem nach einem der vorhergehenden Ansprüche, gekennzeichnet durch seine Verwendung als Funknetz, insbesondere Betriebsleitfunknetz für weg-, insbesondere spurgebundene Fahrzeuge, insbesondere für Eisenbahnen oder Magnet-Schwebebahnen.

## Claims

1. Radio system for communications transmission between at least one mobile station and n stationary base stations arranged along a path, in which
- the n stationary base stations are subdivided into m groups (3, 4), wherein 1 < m ≤ n and n > 1, and stand in radio connection with at least one mobile station (5), which moves along the path,
- the stationary base stations of each of the m groups (3, 4) are each time connected together into the form of a base station chain by way of a modulation feeder (1, 2) individual to the group and the ends (10, 11 or 20, 21) of these m mutually independent chains (1, 2) are connected with a central radio station (6),
- base stations directly adjacent along the path always belong to different groups (3, 4),
characterised by the following features:
- the n stationary base stations (3, 4) transmit first radio signals on m different frequencies (fₒ₁, fₒ₂) of a first amount of frequencies, wherein base stations which belong to one and the same groups (3 or 4) transmit on one and the same frequency (fₒ₁ or fₒ₂) and base stations which belong to different groups (3, 4) transmit on different frequencies (fₒ₁, fₒ₂);
- the at least one mobile station (5) transmits second radio signals on m different frequencies (fₒ₂, fₒ₄) of a second amount of frequencies, wherein the intersection of the first and second amounts is zero;
- all n or a part of the n stationary base stations (3, 4) receive or receives the second radio signals on all m or on a part of the m frequencies (fₒ₂, fₒ₄) of the second amount and the at least one mobile station (5) receives the first radio signals on all m frequencies (fₒ₁, fₒ₂) of the first amount.

2. Radio system according to claim 1, characterised in that the association of the individual base stations arranged along the path with the individual groups (3, 4) is carried out in such a manner that there are at least m directly succeeding base stations along the path, in which the Ith base station each time derives from the Ith group, wherein I = 1, 2, ... m.

3. Radio system according to claim 2, characterised in that this association of m base stations with the individual groups forms a first basic sequence and that this first basic sequence is repeated at least once at least in part, but preferably fully, along the path.

4. Radio system according to claim 2, characterised in that this association of the m base stations with the individual groups forms a first basic sequence and that along the path there is at least one further sequence of m directly succeeding base stations, the association of which with the individual groups is produced by permutation from the first basic sequence.

5. Radio system according to one of the preceding claims, characterised in that of the n base stations of the two groups (3, 4) always only the two base stations are activated, i.e. can transmit and receive radio signals, which each time lie closest in terms of position to the mobile station (5) and that the remaining n-2 base stations of the two groups (3, 4) are each time deactivated.

6. Radio system according to one of the preceding claims, characterised in that in the case of several mobile stations the radio communication of the individual mobile stations with the central radio station devolves in the time multiplex method.

7. Radio system according to one of the preceding claims, characterised in that the n stationary base stations are subdivided into m = 2 groups (3, 4), that the base stations of the first group (3) transmit the first radio signals on a first frequency (fₒ₁) and the base stations of the second group (4) transmit the first radio signals on a second frequency (fₒ₂). that the at least one mobile station (5) transmits the second radio signals on a third and fourth frequency (fₒ₃, fₒ₄) and receives the first radio signals on the first and second frequency (fₒ₁, fₒ₂) and that the stationary base stations of both groups (3, 4) receive the second radio signals on the third and fourth frequency (fₒ₃, fₒ₄).

8. Radio system according to claim 7, characterised in that the mobile station (5) comprises a further central radio system (50) as well as two transmitter/receiver apparatus (51, 52) connected with this further central radio station (50), that the first transmitter/receiver apparatus (51) transmits the second radio signals on the third frequency (fₒ₃) and the second transmitter/receiver apparatus (52) on the fourth frequency (fₒ₄) and both transmitter/receiver apparatus (51, 52) receive the first radio signals on the first and second frequencies (fₒ₁, fₒ₂).

9. Radio system according to one of claims 7 and 8, characterised in that the central radio station (6) comprises a control and evaluating unit (60) as well as a first and second radio signal generating unit (61, 62) and a first and second radio signal evaluating unit (63, 64), that the control and evaluating unit (60) is connected by way of the first radio signal generating unit (61) with the transmitter-side end (10) of the first modulation feeder (1) for the first group (3) of stationary base stations and by way of the first radio signal evaluating unit (63) with the receiver-side end (11) of the first modulation feeder (1) and is connected by way of the second radio signal generating unit (62) with the transmitter-side end (20) of the second modulation feeder (2) for the second group (4) of stationary base stations and by way of the second radio signal evaluating unit (64) with the receiver-side end (21) of the second modulation feeder (2).

10. Radio system according to claim 9, characterised in that a bit synchronisation and diversity changeover unit (65) is connected between the two radio signal evaluating units (63, 64) and the receiver-side ends (11, 12) of the two modulation feeders (1, 2).

11. Radio system according to one of claims 7 to 10, characterised in that the further central radio station (50) of the at least one mobile station (5) comprises a further control and evaluating unit as well as a further first and further second radio signal generating unit and a further first and further second radio signal evaluating unit, that the further control and evaluating unit is connected by way of the further first radio signal generating unit with the transmitter input of the first transmitter/receiver apparatus (51) and by way of the further first radio signal evaluating unit with the receiver output of the first transmitter/receiver apparatus (51) and is connected by way of the further second radio signal generating unit with the transmitter input of the second transmitter/receiver apparatus (52) and by way of the further second radio signal evaluating unit with the receiver output of the second transmitter/receiver apparatus (52).

12. Radio system according to claim 11, characterised in that a further bit synchronisation and diversity changeover unit is connected between the two further radio signal evaluating units and the receiver outputs of the two transmitter/receiver apparatus (51, 52).

13. Radio system according to one of the preceding claims, characterised in that the modulation feeders (1, 2) are constructed as optical waveguides.

14. Radio system according to one of the preceding claims, characterised in that the frequencies of the first amount (fₒ₁, fₒ₂) are offset by the duplex spacing from the frequencies of the second amount (fₒ₃, fₒ₄).

15. Radio system according to one of the preceding claims, characterised by its use as a radio network, especially an installation control radio network for track-bound, especially rail-bound, vehicles, especially for railways or magnetic suspension railways.

## Revendications

1. Système pour la transmission de données par radio entre au moins une station mobile et n stations de base fixes ordonnées le long d'un trajet, dans lequel
- les n stations de base fixes sont subdivisées en m groupes (3, 4) avec 1 < m ≤ n et avec n > 1 et elles sont en liaison radio avec ladite au moins une station mobile (5) qui se déplace le long du trajet ;
- les stations de base fixes de chacun des m groupes (3, 4) sont reliées les unes aux autres via une ligne de modulation respective (1, 2) propre aux groupes respectifs sous forme d'une chaîne de stations de base, et les extrémités (10, 11 ou 20, 21) de ces m chaînes (1, 2) indépendantes les unes des autres sont reliées à une centrale radio (6);
- les stations de base directement voisines le long du trajet appartiennent toujours à des groupes différents (3, 4);
caractérisé en ce que
- les n stations de base fixes (3, 4) émettent des premiers signaux radio sur m fréquences différentes (f₀₁, f₀₂) d'une première famille de fréquences, et les stations de base qui appartiennent à un seul et même groupe (3 ou 4) émettent sur une seule et même fréquence (f₀₁ ou f₀₂) et les stations de base qui appartiennent à différents groupes (3, 4) émettent sur différentes fréquences (f₀₁, f₀₂) ;
- ladite au moins une station mobile (5) émet des seconds signaux radio sur m fréquences différentes (f₀₃, f₀₄) d'une seconde famille de fréquences, l'intersection de la première et de la seconde famille étant nulle ;
- toutes les n stations de base fixes (3, 4), ou une partie des n stations de base fixes, reçoivent les seconds signaux radio sur toutes les m fréquences (f₀₃, f₀₄) ou sur une partie des m fréquences de la seconde famille, et ladite au moins une station mobile (5) reçoit les premiers signaux radio sur toutes les m fréquences (f₀₁, f₀₂) de la première famille.

2. Système radio selon la revendication 1, caractérisé en ce que l'association des stations de base individuelles ordonnées le long du trajet aux groupes individuels (3, 4) est telle qu'il existe au moins m stations de base qui se succèdent directement le long du trajet, dans lesquelles la l^{ième} station de base provient respectivement du l^{ième} groupe avec l= 1,2, ..., m.

3. Système radio selon la revendication 2, caractérisé en ce que cette association des m stations de base aux groupes individuels forme une première succession de base, et en ce que cette première succession de base se répète le long du trajet au moins une fois du moins en partie, mais de préférence entièrement.

4. Système radio selon la revendication 2, caractérisé en ce que cette association des m stations de base aux groupes individuels forme une première succession de base, et en ce qu'il existe le long du trajet au moins une autre succession de m stations de base qui se succèdent directement, dont l'association aux groupes individuels résulte d'une permutation de la première succession de base.

5. Système radio selon l'une quelconque des revendications précédentes, caractérisé en ce que parmi les n stations de base des deux groupes (3, 4), uniquement seules les deux stations de base sont activées, c'est-à-dire qu'elles peuvent émettre et recevoir des signaux radio, qui sont les plus proches dans l'espace de la station mobile respective (5), et en ce que les autres n-2 stations de base des deux groupes (3, 4) sont chacune désactivées.

6. Système radio selon l'une quelconque des revendications précédentes, caractérisé en ce que pour plusieurs stations mobiles, la commutation radio des stations mobiles individuelles avec la centrale radio se fait par le procédé de multiplexage dans le temps.

7. Système radio selon l'une quelconque des revendications précédentes, caractérisé en ce que les n stations de base fixes sont subdivisées en m = 2 groupes (3, 4), en ce que les stations de base du premier groupe (3) émettent les premiers signaux radio sur une première fréquence (f₀₁) et les stations de base du second groupe (4) émettent les premiers signaux radio sur une seconde fréquence (f₀₂), en ce que ladite au moins une station mobile (5) émet les seconds signaux radio sur une troisième et sur une quatrième fréquence (f₀₃, f₀₄) et reçoit les premiers signaux radio sur la première et la seconde fréquence (f₀₁, f₀₂), et en ce que les stations de base fixes des deux groupes (3, 4) reçoivent les seconds signaux radio sur la troisième et la quatrième fréquence (f₀₃, f₀₄).

8. Système radio selon la revendication 7, caractérisé en ce que la station mobile (5) comprend une autre centrale radio (50) ainsi que deux appareils émetteurs/récepteurs (51, 52) reliés à cette autre centrale radio (50), en ce que le premier appareil émetteur/récepteur (51) émet les seconds signaux radio sur la troisième fréquence (f₀₃) et le second appareil émetteur/récepteur (52) sur la quatrième fréquence (f₀₄), et les deux appareils émetteurs/récepteurs (51, 52) reçoivent les premiers signaux radio sur la première et la seconde fréquence (f₀₁, f₀₂).

9. Système radio selon l'une ou l'autre des revendications 7 et 8, caractérisé en ce que la centrale radio (6) comprend une unité de commande et d'évaluation (60) ainsi qu'une première et une seconde unité d'émission de signaux radio (61, 62) et une première et une seconde unité d'évaluation de signaux radio (63, 64), en ce que l'unité de commande et d'évaluation (60) est reliée via la première unité d'émission de signaux radio (61) à l'extrémité côté émission (10) de la première ligne de modulation (1) pour le premier groupe (3) de stations de base fixes, et via la première unité d'évaluation de signaux radio (63) à l'extrémité côté réception (11) de la première ligne de modulation (1), et via la seconde unité d'émission de signaux radio (62) à l'extrémité côté émission (20) de la seconde ligne de modulation (2) pour le second groupe (4) de stations de base fixes, et via la seconde unité d'évaluation de signaux radio (64) à l'extrémité côté réception (21) de la seconde ligne de modulation (2).

10. Système radio selon la revendication 9, caractérisé en ce qu'une unité de synchronisation de bit et de commutation par diversité (65) est connectée entre les deux unités d'évaluation de signaux radio (63, 64) et les extrémités côtés réception (11, 21) des deux lignes de modulation (1, 2).

11. Système radio selon l'une quelconque des revendications 7 à 10, caractérisé en ce que l'autre centrale radio (50) de ladite au moins une station mobile (5) comporte une autre unité de commande et d'évaluation ainsi qu'une autre première unité d'émission de signaux radio et une autre seconde unité d'émission de signaux radio et une autre première unité d'évaluation de signaux radio et une autre seconde unité d'évaluation de signaux radio, en ce que l'autre unité de commande et d'évaluation est reliée via l'autre première unité d'émission de signaux radio à l'entrée d'émission du premier appareil émetteur/récepteur (51) et via l'autre première unité d'évaluation de signaux radio à la sortie de réception du premier appareil émetteur/récepteur (51) et via l'autre seconde unité d'émission de signaux radio à l'entrée d'émission du second appareil émetteur/récepteur (52) et via l'autre seconde unité d'évaluation de signaux radio à la sortie de réception du second appareil émetteur/récepteur (52).

12. Système radio selon la revendication 11, caractérisé en ce qu'il est prévu entre les deux autres unités d'évaluation de signaux radio et les sorties de réception des deux appareils émetteurs/récepteurs (51, 52), une autre unité de synchronisation de bit et de commutation par diversité.

13. Système radio selon l'une quelconque des revendications précédentes, caractérisé en ce que les lignes de modulation (1, 2) sont réalisées sous forme de guides d'ondes lumineuses.

14. Système radio selon l'une quelconque des revendications précédentes, caractérisé en ce que les fréquences de la première famille (f₀₁, f₀₂) sont décalées de l'écart duplex par rapport aux fréquences de la seconde famille (f₀₃, f₀₄).

15. Système radio selon l'une quelconque des revendications précédentes, caractérisé par son utilisation comme réseau radio, en particulier comme réseau radio de contrôle pour des véhicules guidés, en particulier guidés sur voies, notamment pour des véhicules ferroviaires ou des trains à lévitation magnétique.
